# EUROPEAN PATENT SPECIFICATION

(11) **EP 3 807 831 B1**
(45) Date of publication and mention of the grant of the patent: **23.10.2024**
(21) Application number: 19730747.3
(22) Date of filing: 11.06.2019
(51) Int. Cl.: G06Q 20/34, G06Q 20/40, G06K 7/10, H04W 4/80, H04W 12/06

(54) **METHOD AND SYSTEM TO CREATE A TRUSTED RECORD OR MESSAGE AND USAGE FOR A SECURE ACTIVATION OR STRONG CUSTOMER AUTHENTICATION**
VERFAHREN UND SYSTEM ZUR ERZEUGUNG EINER VERTRAUENSWÜRDIGEN AUFZEICHNUNG ODER NACHRICHT UND VERWENDUNG FÜR EINE SICHERE AKTIVIERUNG ODER STARKE KUNDENAUTHENTIFIZIERUNG
PROCÉDÉ ET SYSTÈME DE CRÉATION D'UN ENREGISTREMENT OU D'UN MESSAGE DE CONFIANCE ET SON UTILISATION POUR UNE ACTIVATION SÉCURISÉE OU UNE AUTHENTIFICATION FORTE D'UN CLIENT

(30) Priority: 15.06.2018 EP 18305741
(43) Date of publication of application: 21.04.2021
(73) Proprietor: Thales Dis France SAS, 92190 Meudon (FR)
(72) Inventor: DELSUC, Julien, 92190 Meudon (FR); CHAFER, Sylvain, 92190 Meudon (FR); AMADOR, Eric, 92190 Meudon (FR); GULLBERG, Peter, 92190 Meudon (FR)
(74) Representative: Grevin, Emmanuel
(86) International application number: PCT/EP2019/065225
(87) International publication number: WO 2019/238688

(56) References cited:
- WO-A1-2013/034681
- WO-A1-2016/006924
- WO-A1-2016/190678
- US-A- 5 825 005
- US-A1- 2008 201 265

## Description

The invention relates to a method and system to create a trusted record or message in a contactless portable device, such as contactless smart cards, wherein a software application is provided in the portable device to create said record or message.

Records or messages created by the invention may preferably be compliant to NDEF format standard. Alternatively, they may also be compliant to QR code, 2D or 3D code standards.

It relates also to the use of above method and system to make secure mobile application activations or for realizing a strong customer authentication, (notably in banking domain for mobile banking application), using said contactless device and an NFC reader such as an NFC mobile phone.

The involved activation or authentication may preferably use biometric (or fingerprint) data; Biometric data may be captured thanks to corresponding sensor preferably on said contactless devices or NFC reader.

Especially, the invention aims to provide a solution to secure mobile application activation or strong customer authentication by the simple use of NFC reader that supports only a reading mode of static NDEF records.

### Background of technology.

Smart cards (or electronic chip cards) are often used for card payments and also strong customer authentication. The underlying specifications used are ISO 7816 (chip interface) and ISO 14443 (contactless interface). In a nutshell, these standards use communications or data exchanges comprising a command-response based structure, where the terminal (or card reader) sends a command and the card returns a corresponding response.

For payments, the chip (or smart) cards uses a variant of the ISO specifications called EMV (Europay MasterCard Visa), and the terminal (or card reader) is mostly a Point-Of-Sale terminal (POS), but could also be a mobile device or an ATM.

In the case of strong customer authentication, one common standard is called "Chip Authentication Program" (CAP), which in turn relies on EMV Specifications, are using Personal Card Reader which uses a CAP Application.

Another method is Open Authentication HOTP/OCRA application on the card to generate One-Time-Passwords. As of today, most personal card readers are using the chip interface, but a mobile could use the contactless interface to generate the one-time-password. There are also other solutions based on the ISO standards, such as PKI-card, which allow to generate Digital Signature.

There exists another standard, based on the contactless interface, which is called NFC "Data Exchange Format" (NDEF), which is a read/write interface, allowing data records to be read and written to a card. When using the NDEF Type 4, this application is authorized to co-exist on an EMV-card.

The NFC Forum approved four following tag types.

Type 1 Tag is based on ISO/IEC 14443A. This tag type is read and re-write capable. The memory of the tags can be write protected.

Type 2 Tag is based on ISO/IEC 14443A. This tag type is read and re-write capable. The memory of the tags can be write protected.

Type 3 Tag is based on the Japanese Industrial Standard (JIS) X 6319-4. This tag type is pre-configured at manufacture to be either read and re-writable, or read-only.

Type 4 is fully compatible with the ISO/IEC 14443 (A \& B) standard series. It is pre-configured at manufacture to be either read and re-writable, or read-only. For the communication with tags APDUs according to ISO 7816-4 can be used.

### Concerning NDEF.

The NFC forum defined a structure for writing data to tags or exchanging data between two NFC devices. The format is called NDEF. An NDEF record can contain multiple different RTD. An RTD is an information set for a single application. An RTD can only contain a single information such as text, a URI, a business card or pairing information for other technologies.

Many mobiles today have contactless interface support, however, certain mobiles impose strict restrictions on what an application can do with the contactless interface, and certain of these mobiles only allow "READ" access using NFC Data Exchange Format (NDEF), meaning that it's not possible to use these mobiles for EMV, CAP or PKI (Digital Signatures), or any other transaction requiring the terminal to send specific APDU-commands to the card.

This puts a very tight restriction on what can be done with the card, since you can only read data using the NDEF protocol and that prevents a mobile application from accessing normal functions on the card that are used for payments and strong customer authentication.

One option would be to add a static signed data block onto a NDEF record, such as adding the EMV Offline static data authentication (SDA) block onto a NDEF record. Using this methods, it would allow the mobile to verify a static signed data block, and it would also possible to determine that the card number has been issued and haven't expired.

However, since this data format is static it can easily be skimmed and since there are no access conditions, anyone can read and copy this static data and this presents a security problem.

Today, when activating a mobile banking application, it is needed to ensure it is the legitimate user that activates the mobile banking application. Therefore, the bank need to apply a number of checks during the activation process. One such check is to ask customer for his username and password and some other knowledge he has in his possession such as Knowledge Based Authentication.

However, this creates a problem, since the information available to the user, may already be known by the attacker or easily stolen from the user and therefore, the mobile Bank application activation process for a user turns to be a weak link.

The wanted situation is that the bank can use information that is persistent and secure, which cannot easily be stolen and that could be used for mobile banking application activation.

Therefore, using today's technologies for EMV-transactions, one-time-passwords, challenge-response or digital signatures using cards are not suitable to be used, since there are no way for the proper interaction with the card with these certain mobiles.

### Prior art.

Patent application WO2016/006924 describes one method where a card is activated when a correct fingerprint is presented. This can be useful in POS scenarios. However in a mobile scenario, this cannot be used since the mobile application cannot control the commands required to do a contactless card payment or a strong customer authentication with the mobile using a contactless card.

Patent application WO2013034681 A1 describes a method comprises the steps of: upon the OTP generating device being inserted into the RF field, generating a new OTP code; formatting the OTP code into a static message; responding to interrogation requests from an RFID/NFC reader; and responding to read requests from the RFID/NFC reader with the OTP code being part of a message as if it were a static message, using standardized methods.

Patent application US2008201265 A1 discloses a smart card with random temporary account number generation. An identical random number generator and a set of account numbers are included in the card and in a remote server to enable connection with a verified temporary account number. The card has a biometric sensor and the use of a fingerprint is disclosed for only actuate the card when user is authenticated.

Patent application US2008/201265 (A1) describes a system which relates to a temporary account number generation, which uses a biometric signal for activation and deactivation of a card. Secondly, the system can randomly select one account number from a plurality of account numbers. However, card numbers can only be retrieved electronically by sending commands to the EMV application and since certain mobiles only supports reading of NDEF records, which is not suitable method to be used with the mobile for payments or strong customer authentication.

Patent application WO 2016/190678 relates to a method for reducing the power consumption on cards; doing power management; detecting a finger on the fingerprint sensor; presenting status of the fingerprint matching on a display; and to present a status if the fingerprint is present on the sensor. Therefore none of these features in this patent application make the transaction more secure, or make it functional over NDEF interface.

The document US 5,825,005 describes a system where fingerprint is used to give access, and also that the fingerprint may be stored in a central database, wherein the card is dipped into a fingerprint sensing device, and which transmit the fingerprint, and if there is a match, it allows access to a memory where the fingerprint is stored.

Even though this method could be used as a way to give access to a NDEF record, it won't allow the user to be "strongly authenticated" remotely in a convenient and secure way using this method; In addition, storing fingerprints in a central database is problematic, since it is "sensitive Personally Identifiable Information" (PII) and some countries have strict restrictions on how to use this data.

Therefore, none of the above technology statements will help to solve the problem identified by the inventors.

### The invention

The invention proposes a method that overcomes the drawbacks of the present art, in a more convenient and secure way. First of all, inventor's solution determines how to have a reliable or trusted information that is persistent and/or secure, and which cannot easily be stolen and that is usable for sensible operations locally or remotely namely for mobile banking application activation or authentication.

This lead to a method principle in which a trusted NDEF record (or message or information) is first of all generated an in a NFC (or contactless) portable (or wearable) device, such the smart card.

In a second step, the inventors found out how to use said trusted NDEF record notably in a method and a system that enables a bank-customer to perform secure mobile application activation or strong customer authentication using a contactless card, which uses the NDEF Tag, (preferably in read only mode for certain mobile).

Advantageously, this invention can be used for mobile activation by card (instead of calling IVR or using traditional web site with card credential manual entry);
It also allows a secure and quick card "quick view" (display card information and/or reward of a the card that we tap on the phone) - rather than current "quick view" which displays default card information;
Also in cases where the card (or NFC devices) contains an onboard biometric sensor, one may rely on corresponding collected data.

According to one particular aspect of a particular operation of the invention method, the contactless card (or NFC device) may be configured for creating (preferably in real-time or dynamically) a record that is compatible with NDEF record standard. This generation may be made for example upon receiving a read request of a record.
- The generated NDEF message may contain data (preferably collected dynamically). Additionally, collected data may be verified or checked remotely in a trusted server of a service provider, merchant server or bank server.

According to an aspect of the operation, an NDEF application in the NFC device may preferably insert dynamic data(s) into the payload(s) in at least one chosen NDEF record(s) among one or several memorized in the NFC device, and in real-time it may also recalculate the NDEF message or record and its associated lengths with the new dynamic (or variable) content.

The NFC device may also perform at least one internal cryptographic operation before returning a new NDEF record to the NFC reader.

One aspect or advantage of the invention, is that the response is non-replayable (since it change namely at each reader request). For example, a remote server may detect if a same or previous response is sent again, preferably using a counter (7) that changes for each invocation, either incrementing or adding or subtracting a value.

Further, the invention may use a number of different collected data, which allows the bank to establish a certain reliable or trusted context;
Further, it may relate to NDEF Tag reading, which can function in read-only mode;
Further, it may relate to a security scheme that can be cryptographically verified remotely;
Further, depending on the context and the configuration of the card, the card may generate a result taking into account said context and configuration.

A further embodiment of the system, may consist of a contactless card (or device) that have at least one first application, being able to manage NDEF protocol, an optional second application, an optional fingerprint sensor and fingerprint matching logic with at least one fingerprint template, said logic determining if there is a successful match of a fingerprint against at least one memorized fingerprint template, and consequently generating a positive fingerprint match signal.

Another possible interesting feature of this invention is that it allows to capture or collect data from a second application in the NFC device;
For example, here the data is exemplified with the Application Transaction Counter (ATC) data, located in the EMV Application, and this data may be advantageously inserted in the NDEF record, and it may also preferably, (but optionally), be an input data for the generation of a dynamic response to a NFC reader request.

The benefit of including the ATC into the dynamic response generation may afterward appear apparent to the person skilled in the art but is developed thereafter.
- Since an event-based dynamic response does have not any expiry time, meaning there is no limit in the time between generation of the dynamic response and the validation of the dynamic response, as long they are in sequence. Adding an ATC as input to the dynamic response, allows the bank to validate the received ATC against the ATC captured by the card transaction authorization system for the last EMV Card transaction.
- If the ATC in the dynamic response is either the same or a higher value, it can be accepted, otherwise the dynamic response may be discarded. This allows the bank to determine the maximum time since the dynamic response was generated.
- Advantageously, the method may include Open Authentication (OATH) HOTP protocol or OATH OCRA protocol, but not limited to this, as other methods could equally apply, such as generating EMV application cryptograms based on EMV-standards or Chip Authentication Program (CAP).

Therefore, a first object of the invention is a method to create a trusted NDEF record in an NFC device, comprising the steps of:
- providing an NDEF application in said NFC device,
- having a first NDEF record contained in an NFC device,
characterized in that said NDEF application is configured to generate a second NDEF record different from a previous first one, based on data collected, as a result of a detection or upon a receipt of a request of a NFC reader or after collection of new data.

According to another features or embodiment of the method:
- Said NDEF record is created in real-time at a format compatible with NDEF record standard;
- Said NDEF record is captured by the NFC reader in a read only mode;
- Said NDEF application is configured to realize the following steps:
   - Insert said data related to collected data into payload(s) of selected NDEF record(s) and,
   - Recalculate, (preferably in same communication session between NFC reader and NFC device), the length of said generated NDEF record and/or message;
- The NFC device performs at least one internal cryptographic operation to generate a response before returning a record or a response;
- The cryptographic operation may be symmetric and/or HMAC-SHA operation, where the response may be truncated or not, and/or asymmetric key operation where the response is a signature;
- Said device may comprise a banking application and said collected data may preferably include an information related to an application transaction counter value (ATC); Said ATC value may be used for determining the validity of the generated response;
- Said NFC device may consists in a NFC banking device with a fingerprint reader, and wherein said collected data includes information related to fingerprint read by the fingerprint reader.

Another object of the invention lies also in the use of above method for a method to trigger a trusted specific action in a NFC reader or a remote server, wherein an NFC reader reads an NDEF record in an NFC device, said NDEF record being interpreted or executed by a NDEF application (2) to trigger an action,
The method is characterized in that said NDEF record is created by a method to create a trusted NDEF record according to any one of above features or embodiments.

According to another preferred features or embodiments, of the method, said action is selected among:
- A secure NFC reader activation;
- A strong customer authentication;
- authorise or unblock an access to a secure account;
- display device information and/or reward on mobile display, and activated when said NFC device is presented to a NDEF reader in order to be read by it or interact with it;
- establish or identify a certain context allowing a remote service provider to take a decision linked to said context;
- authorize or activate a payment.

The invention object comprises also a system to create a trusted NDEF record in an NFC device, comprising:
- An NFC device containing a first NDEF record,
- An NDEF application (5) in said NFC device,
characterized in that:
- said NFC device is configured to collect data as a result of a detection or upon a receipt of a request of a NFC reader or after collection of new data, and in that
- said NDEF application is configured to generate a second NDEF record different from said first record, and based on collected data.

According to preferred features or embodiments, of the system:
- It is selected among a contactless smartcard, a wearable device, an IoT (Internet of Things) device, an electronic watch, a bracelet;
- The system comprises a NFC reader selected among a mobile phone, an IoT device, an electronic NFC watch;
- Said NFC device comprises a banking application and said collected data includes an information related to an application transaction counter value (ATC);
- Said NFC device comprises a fingerprint reader, and wherein said collected data includes information related to fingerprint read by the fingerprint reader.
- Said NFC device have at least one NDEF application (5) configured or being able to manage a NDEF protocol, a specific software application, a biometric sensor, at least one memory containing a stored biometric matching logic and at least one biometric template, said biometric matching logic being configured to generate a positive matching signal (14) if a successful match of a captured biometric data against at least one stored biometric template;
- The system may comprise in addition to an NFC device, a NFC reader configured to read said NDEF record in said NFC device and a remote server containing a server software application associated with said NFC device or said NFC device.

### Brief description of the drawings.

These and other aspects of the invention will be apparent from and elucidated with reference to the embodiments described hereafter with reference being made to the drawings in which:
- Figure 1 illustrates an overview of a system according to a preferred embodiment of the invention;
- Figure 2 illustrates a first embodiment of use of above system with a contactless card, operating as one factor during a secure mobile banking activation;

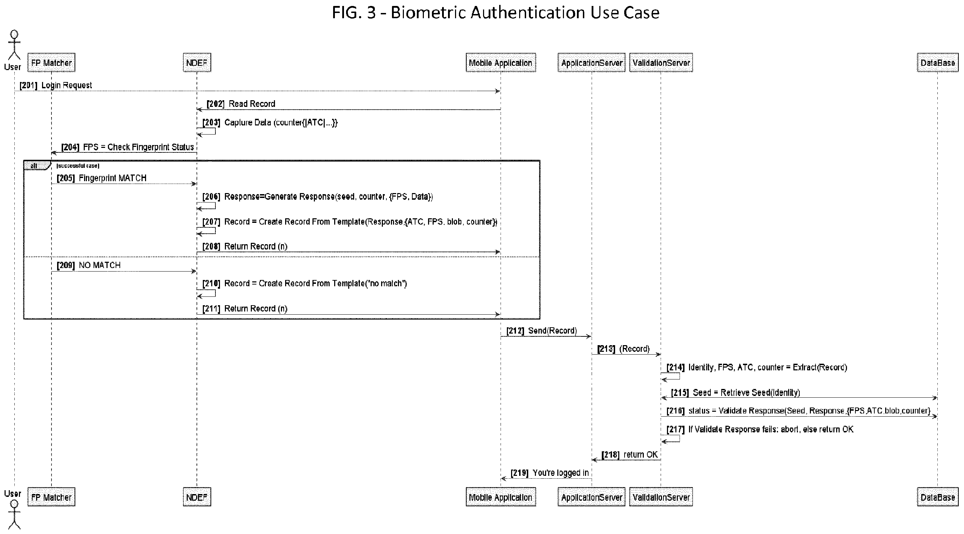

- Figure 3 illustrates the use of above system according to a second embodiment, with a contactless card, to provide a strong customer authentication, implementing a NDEF read only transaction and onboard fingerprint sensor;
- Figure 4, illustrates the use of above system according to a third embodiment of the invention for a remote server action activated by fingerprint;
- Figure 5A illustrates a Remote Server Fingerprint Activated Action;
- Figure 5B illustrates a mobile activation with server generated authentication credentials;
- Figures 6A & 6B illustrates a mobile activation with client generated authentication credential;
- FIG. 7, illustrates a NDEF 1-Record format (similarly explained in FIG. 9);

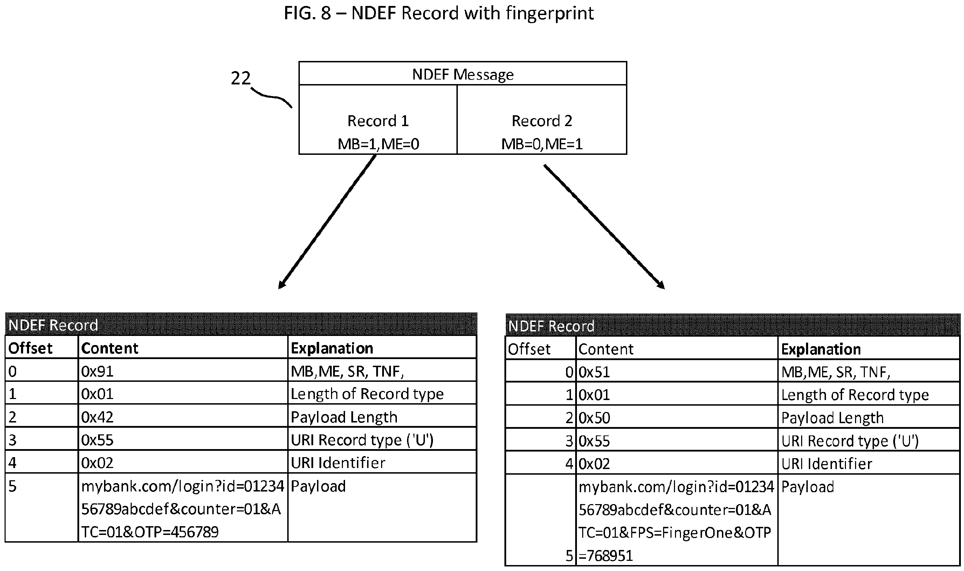

- FIG. 8, illustrates a NDEF 2-Record format, wherein the card may generate two separate dynamic responses with two different purposes, each encoded in one record each.
- FIG. 9, illustrates two NDEF record, each captured in two separate session, wherein the secondly captured record is different from the first record, captured in a previous session along with an example of payload calculation (1L-3L) .

### Detailed description.

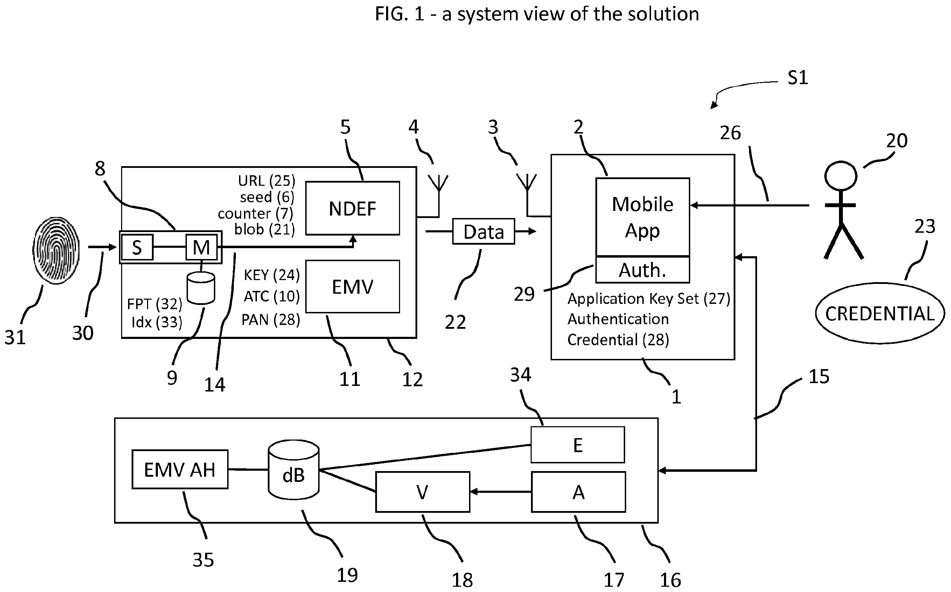

At figure 1, according to one preferred embodiment of the invention, there is an overview of a system S1 to create a trusted record 22 in an NFC device 12. The system comprises at least (or constitutes) an NFC device containing a first NDEF record (22) and an application (5) in said NFC device.

Here, The NFC device 12 is a contactless smart card 12, but it may also be in the shape of an electronic smart watch, since many smart watches has contactless card emulation capability, and can contain intelligent software applications (or software interface), with nearly same or even identical functionality as NDEF application (5), and software service application such as an EMV Application 11 to be used as contactless credit card.

The NFC device may be also a wearable device, an IoT device, an electronic bracelet.

In another embodiment (not described) the device 12 (such a card) may comprise a display (notably with eInk, amoled, or bistable technology), and the trusted message may be generated and displayed in a QR code format (3d code) on a card.

Alternatively, the format of the created record structure may (or not) correspond to the standard NDEF and the payload (or variable record or message) at least may be displayed under 3D code format or other format (file or string of characters readable with reader having OCR application). This enables other communication possibilities namely with the mobile or other optical reader.

The display is changed according to the invention for each transaction (namely EMV) and is may be a stable visible output. The validity of the output message displayed may be time limited for any use namely as authentication or mobile banking transaction.

The mobile may read the displayed code with optical means (camera) by taking a photo.

The message included in the 3D code may be then used by the mobile as the response received by it when it is on NDEF format.

When displayed on a screen of a watch, (powered by battery), the 3D code may be displayed during a limited time corresponding to the limited time of validity.

Consequently, the device 12 (card, watch...) may not use the NFC capabilities and NDEF records or application but uses instead 3D code capabilities with a corresponding software application 5bis similar to software application 5.

The reader capabilities also may have corresponding interface or application to extract the message or data generated in the 3D code.

In this alternative embodiment (with display means 3D), the generation of the response of the device 5 may occur automatically, for example as soon as there is a change in the data to be collected (fingerprint, counter 7 value, ATC value) or as soon as a corresponding request of 3D code is emitted by the mobile by any interface corresponding to an communication interface of the device 5.

The generation of the displayed variable response may occur also when a user activate the device by a direct prompt command (switch).

In contrast, the use of NDEF record is particularly interesting since the reader may bring its proper electromagnetic energy to power an NFC device (credit card do not need to have battery).

There could be a mixture of interface capabilities and communication means and software applications (NFC and a display) where the energy and request is brought using NFC interface and the record or response including the payload may be displayed on the NFC device.
The realization of a transaction may require both reading of the message under two different format (NFC and 3D code).

In the example, the smart card 12 has an antenna interface 4 operating preferably according to ISO 14443 standard, or any other contactless standard that allows short distance contactless communication.

The NFC device 12 (card, watch) may also contain optionally a biometric capturing unit, having near or even identical functionality as the fingerprint sensor 8. Other biometric sensors may be used such as voice sensor, image sensor.

According to a characteristic of this preferred embodiment, the software application is an NDEF software application which is configured to generate a second NDEF record, (preferably but not exclusively different from a previous first one); the generation of the second NDEF record by the NDEF application 5 is based on data collected (or at least received) in the NFC device 12.
The generation and / or the collecting of the collected data may be preferably made as a result of a detection or upon a receipt of a request of a reader or after collection of new data.

The system S1 (first electronic portable communication device (namely a NFC device 12 in the example) is intended to work or to cooperate with at least a second electronic portable communication device 1, such as a smartphone (called thereafter mobile), having reading capabilities with the first one.

The reader 1 may be selected among a mobile phone, an IoT device, an electronic watch. The reader have preferably NFC capabilities.

The system S1 may comprise a remote server 16 cooperating with the mobile such a service provider server (described later).

The mobile 1 is equipped with a "mobile application" (2) (or computer program), preferably a banking application to do financial services. It may comprise a different applications depending the function of the device or the service provider.

The mobile 1 is configured to enable interaction or a communication (preferably without contact) with the first portable (or wearable) electronic device 12, here embodied preferably in the example by a contactless smartcard. (The first portable device 12 is called thereafter "NFC card" 12 to simplify and for clarity).

The interaction (or communication) between the mobile 1 and the NFC card 12, is made through an NFC (Near Field Communication) interface 3. The first device may be also any device or wearable like a watch, a bracelet having communication interface capabilities with the mobile 1. Preferably, the communication is of NFC type for security reason, but not exclude other like Bluetooth^{™}, or optical or infrared communication or UHF tag communication.

The mobile 1 may also be in the shape of a smart watch, since those also have contactless card reading capability and can contain intelligent applications, with nearly the same or even identical functionality as a Mobile Application 2.

The mobile 1 is configured also to connect or communicate or interact with a remote "service provider server" 17 through a communication network 15, Wi-Fi, cellular telecommunication, internet.

The invention is advantageous namely because it is very simple enables the use of mobile having at least a read only mode. Mobile does not require to use other capabilities like write or other instructions.

In the example, the service provider server is a bank application server 17 but can be any other service. (For clarity and to simplify, the server 17 is called thereafter banking server 16 and any related server application 17 may be called bank server application).

The mobile may contain also an application key set 27. It may also preferably contains credential 28. Their use will be explain later in reference to the different use case embodiments.

Said contactless card 12 and mobile 1 may be handled by a user 20 to enable interaction between them. Advantageously, the invention enables in a convenient way to do sensitive operations namely using to portable device such as a smartphone and a trusted smart card (such as EMV credit card) having the invention capabilities. Invention may also provide alternatively the combination of a trusted smart card and an electronic watch (as a reader) having the described function included in the smart phone.

This is very convenient for user since it uses usual portable devices (card associated with a mobile, or a watch or wearable) to implement at least one or two or more security factors depending the security context involved.

The NFC card 12 contains here an NDEF Application 5 (or NDEF computer program 5) and an optional EMV Application 11 (or EMV computer program 11).

According to a preferred feature, the NFC device (12) performs at least one internal cryptographic operation (206, 404) to generate a response before returning a record or a response. Alternatively, The record or response containing for example a payload may be prepared before receiving the read request (or other instruction) of the mobile.

The cryptographic operation may be symmetric and/or HMAC-SHA operation, where the response may be truncated or not, and/or be an asymmetric key operation where the response is a signature. Therefore, the record may be more trusted with such security operation.

The NDEF Application 5 of the NFC card, may interface with the mobile 1 through the contactless interface 4. The card may have preferably a personalized secret 6 which could for example be a seed or key 6 or other generally used type of secret; The NFC device may preferably also have in the example, a counter 7 and an optional URL 25. The NDEF application 5 is configured to generate a NDEF message, containing at least one NDEF record 22, hereafter referred to as a record 22.

Further, the NFC card 12 may comprise (as said before), a biometric sensor 8 for authenticating the user 20 by capturing 30 its fingerprint 31. The sensor 8 may be any biometric sensor such as voice sensor, optical sensor...

Further, the NDEF application 5 is configured to gather data captured by the fingerprint sensor 8 or related to said captured data.

Further, the NDEF Application 5 may also gather data from the secondary EMV Application 11 or other software application. In particular, ATC counter value 10 may be accessed in a register with shared access to both application. A banking application alternatively, may memorize, duplicate, or transfer, at each banking transaction, the ATC counter value in a dedicated register accessible by the banking application at least in writing and the NDEF application at least in reading for the purpose of generation of a trusted NDEF record or response.

The sensor 8 (here fingerprint sensor) consists here of two internal part, the sensor (8-S) and the matcher sensor (8-M). The biometric data (fingerprint here) 31 which is captured by the sensor may be part of user's 20 credential 23.

The sensor matcher (8-M) compares against a stored template (here fingerprint type) in an internal template database (9). The data base may contain multiple registered fingerprint templates 32 and associated indexes 33.

If fingerprint 31 matches, the sensor 8 may raise a positive signal 14 (for example a high level of numeric signal) as long as the indicated valid fingerprint is present. The signal 14 (not shown) may also optionally provide the index (idx) 33 of the matched finger template 32.

The user 20 is the one that is interacting with the Mobile Application 2, and have a set of credentials 23. These credentials may be entered 26 by the User 20 into the Mobile Application (2) .

Once the mobile application 2 have been activated for use, the mobile application 2 may make use of an authenticator 29.

The mobile application 2 may make use of authentication credentials 28 to authenticate the user, after the user have activated the mobile application 2.

The secondary Banking Application 11 (or EMV application 11), in the NFC device, may contains preferably an "application transaction counter", also named ATC 10 and a KEY 24 and a PAN 28 (Primary Account Number).

The banking server 16, comprises a computer server with a server interface for interfacing with the network 15 to enable communication and access by the mobile 1; the banking computer server contains a server application 17, which provides the corresponding service to the user.

The banking server 16 also contains (or provides) a computed validation service 18, which may performs validation response furnished via the mobile 1; The response is preferably encrypted or of cryptographic type, wherein the encryption relies on PKI or comprises a certificate.

The banking server may comprise a server database 19 that may contains preferably information about the NFC device 12 (or card) details, such as value related to seeds 6 and counters 7. The banking server may comprise transactional information, user credentials and information such as seeds and counters.

According to the preferred embodiment, the invention relates to a method and/or a system to create a trusted NDEF record 5 in an NFC electronic device 12, in which an NDEF application 5 is provided in the NFC device;

Said NDEF application is configured with computer executable code or steps to generate (preferably dynamically), a NDEF record based on data collected in the NDEF device and different for a previous generated one, as a result of the detection or on receipt of a request of an associated NDEF reader.

NDEF application 5 calculates at least one NDEF record 22 in response to a command or request (preferably during a same communication session but possibly during a previous session) including a command response communication between a communication of a contactless reader 1 and a contactless device 12.

Said NDEF record (22-B) may be preferably created in real-time; It may be create advantageously at a format compatible with NDEF record standard. It may be read by a mobile having read only mode operation for read NDEF records.

The record (or message or response payload) may also be created in advance (because for example, there is not always banking transaction modifying ATC counter). Then, for example in a previous transaction, the ATC changes and upon this change a new record (22-B) is prepared (the energy of a POS or ATM or mobile may be used to power the operation of record creation).

Then, when user wants to use the trusted NDEF record, it may use it just by read it in a reading instruction of the mobile. The record (message) read is used or read like a static record tag but in fact it was updated few time before because it has dynamic capabilities. (In prior art, it seems that only static records in RFID tag devices currently read by NFC mobile).

Depending the operation or action to be made with the trusted record, the service provider (or server) may adapt the requirements or the security level of the trusted record. For example if the operation is not sensible, one may accept a record which have no ATC value change and was created not on real time during a session of command response.

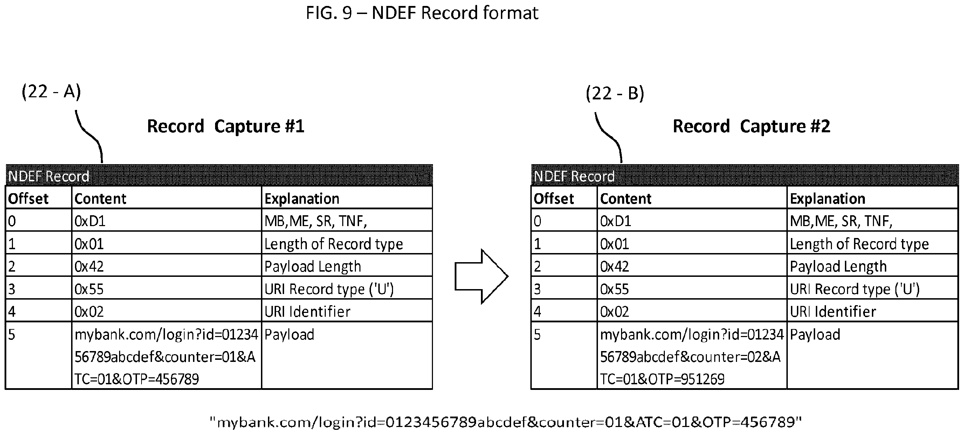

The NDEF application (5) is configured to insert the data related to collected data (7, 10, 25, 31) into payload(s) of selected NDEF record(s) and preferably recalculate, (preferably in same communication session (22) between NFC reader and NFC device), the length of said generated NDEF record and/or message. Alternatively, a new record 22-B (fig.9) may be calculated in advance (namely at the end of a communication session) to save time during a previous communication session between the device 12 and the mobile.

The new record 22-B created in a session (one day for example) may be read during a next interaction with the mobile afterward (for example the day after).

This means that the read or capture record or payload by the mobile may be the one created during a previous request (or interaction with the mobile.

The advantage of creating the record in same communication session (mobile / card) is namely to have the last fresh data updated (such as ATC value) and to be more reliable (or trusted) record for sensitive operation. More the operation is sensitive more the read record must be fresh or updated.

A preferred embodiment or characteristic of the invention method will be described thereafter.

According to this embodiment, the method (and/or system) of the invention intends to create a trusted NDEF record 22 in an NFC electronic device 12; To this purpose, the NFC device 12 is provided with an NDEF application 5 which is configured to generate, a NDEF record.

As yet explained a NDEF record is a record (or message or response) which is readable according to the NFC Data Exchange Format protocol.

### NDEF Structure Explanation.

FIG. 9 shows the structure of a NDEF record (22), where a first record (22) is read in a first session, represented as (22-A), and a second record (22) is read in a second session, represented as (22-B) by the mobile application 2. The second record 22-B may replace the first one in the NFC device. First one record may be erased or memorized aside in the NFC device for at least a period for historic.

The record (22) presented in figure 9 contains five separate protocol elements, where offset 0 contains control information, offset 1 is the length of the record type, offset 2 is the payload length, offset 3 is the record type, offset 4 is the identifier, and offset 5 is the payload.

We see that the payload of record 22-A contains content "mybank.com/login?id=012345 67 8 9abcdef&counter=01&ATC=01&OTP = 456789". It represents a concatenation of captured data and dynamic response, consisting of URL (25) "mybank.com, that also may contain an action "login?", and may be included as part of the captured data, and then id blob (21) "Id=01234567abcdef", counter (7) "counter=01", ATC (10) "ATC=01", and then the cryptographically generated OTP "OTP=45678", all being contained in record (22).

We see that the recalculation of length of payload between record 22-A and 22-B give same result since length does not change although counter changes.

This data, including the captured data are concatenated in a form that can easily be analyzed by the validator, and in the case of URI/URL NDEF format, these variables are concatenated as a query string.

Looking closer and comparing between the first captured record (22-A) in a first session and the second captured record (22-B) in a second session, and more specifically looking at Offset 5, will now be detailed further.

The query name "id" also referred to as blob (21), represents the identity of the card and/or cardholder here exemplified with the value "0123456789abcdef", and this is same between both records.

Looking further, we see the query name "counter", and in the first record (22-A) has the value "01" and the second record (22-B) have the value "02", where the counter is incremented with one between the first and second session, and thereby creating a dynamic part in the record or message.

Then continuing and looking at the next query name "ATC" which has the value "01", captured from secondary application (11) are the same on both records (22). Indicating that no EMV Transaction have been performed in between first and second record generation. So here, ATC value in the generated response is here static (same than previous reading or generation of record) although it lead otherwise to a dynamic part of the record or message when there occur a transaction (namely banking transaction or payment...)with the card or NFC device) between two record captures or reading of NFC device.

Then continuing and looking at the next query name "OTP" which has the value "456789"; and the second record (22-B) contains the value "951269", constitutes a variable (or dynamic) a part of the NDEF record 22-B, and which is included in the prepared response (Payload) to be read by the NFC reader.) This dynamic response is preferably generated using a cryptographic calculation of the captured data, including a seed (6).

Here the record 22-B includes in the payload message two dynamic part of the response which are the counter value and the OTP value (ATC did not changed). When the record 22-B is read, the payload included in it is also read as a global response or message returned to the mobile according to a command response communication scheme.

The value of the query name "OTP" may be generated using any of the previous mentioned methods, and one example of such specification is the Open Authentication OCRA (RFC 6287), where it performs a HmacSHA256, using the seed and the concatenation of the challenge data and OCRA parameters response = HmacSha256 (seed, input) .

In one example, the generation of the code = HMAC-SHA-256 (seed, OCRASuite | '0x00' | C | Q), wherein the C is the counter, and Q contains a concatenation of the captured data, or the hash of the concatenated captured data, wherein the OCRASuite explains the type of cryptographic options. The response or code may be then used at least as "OTP".

Preferably, the record is generated dynamically. Dynamically means that it is on the fly, or in a very short period (ex. within the timeout windows of the contactless protocol during an interaction or communication session with the mobile 1, during a reading session of the mobile comprising a mobile request and response).

In some cases, the card or (device 12) may be powered by itself and provide an active communication or generate regularly said NDEF record just before the interaction with the mobile 1 and that could be valid during a short time.

The NDEF record is based on data collected in the NDEF device 12 by it or using it.

The data may include at least part of collected biometric data or a result of authentication made with collected biometric data.

The data may also include (with or no biometric related data) internal data in the NFC device that may changes regularly or not, such as the value of a counter of banking transaction ATC. It may comprise also the value of a counter of interaction with the mobile 1.

Preferably, the NDEF record may different for a previous generated one to improve the security.

According to a characteristic, the generation of the NDEF record 22 is made as a result of the detection of a request of an associated NDEF reader; The generation of NDEF record 22 may also be made (trigger) on receipt of said request.

For that, each time a reader 1 (mobile) activates the NFC controller (or capabilities) of the mobile 1 and is brought close to the card 12 for read it through a contactless communication. The mobile send a read request according to the NDEF standard to the card to read the NDEF record 22. This read request instruction from the mobile 1 is detected or simply received by card.

The NDEF application 5 may have the function to detect each read instruction coming from the mobile 1. The chip controller may be a contactless electronic chip or dual interface chip (contact and contactless).

Each read instruction received may be detected by the chip controller which compares to predetermined instruction stored in a register memory of the chip. If the received instruction (or received message from the mobile) is an expected read instruction (namely with identification IMEI of the mobile, password, secret or any else specific), then the microcontroller (not shown) of the card 12 starts executing the NDEF application 5 (or program).

The read request instruction of the mobile may be accompanied by an identification number of the mobile 1 or something equivalent which is taken in account by the card 12 to trigger the generation of a new record.

The new record is a trusted one namely because:
- a) it is based on data included in a trusted smart card and which may be checked afterwards;
- b) The data may include values related to a previous transaction known by the server 16;
- c) The data may be hashed, key-hashed cyphered, encrypted, or signed with an internal key or use a seed 6 in a calculation of a certificate and the record may be then verified in the server 16 (or the mobile);
- d) Preferably, it is also trusted because, the record is different from the previous stored one or generated one;
- e) It may be also trusted because generation of a record is made upon detection or a specific message from the mobile;
- f) It may be trusted because also the user may be previously authenticated in the mobile by an authenticating function (authenticator 29);
- e) It may be trusted because the mobile and the card share a secret used in the interaction between the mobile and the card for the generation of the NDEF record.

The trust level may be adjusted by implementing part or all of these security functions or operating mode. Preferably in banking environment, all may be implemented.

The microcontroller of the card 12 is configured to execute computer executable code or steps corresponding to the method steps, including namely the NDEF software application 5.

The service provider server 16 (here a banking server), contains an application server 17, which provides the service to the user. The banking server 16 also contains a validation service 18, which performs validation of the cryptographic response. T, and a database 19 that contains information about the card details, EMV transactional information, user credentials, and information such as seeds and counters.

The bank server may also have an enrolment and provisioning server 34 that makes secure generation of authentication credential 28 and takes care of the provisioning of these. The bank may contain an EMV issuer authorization host 35 that authorizes EMV card payments transactions, and capture the last-ATC of the EMV Transaction and stores this in the database 19.

Example 1 of the process or system usage: activation of a mobile application.

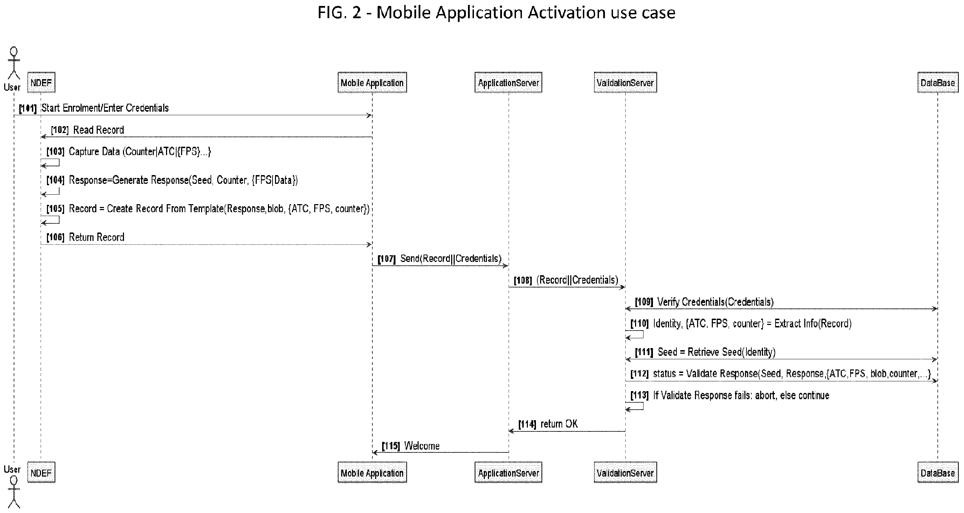

At fig. 2, a first use of the system of fig.1 is described and applied to a secure mobile application activation with a contactless card. The card is used as one security factor during a secure mobile banking activation.

Generally speaking, the steps in all the following figures may correspond to code instruction of a computer program (or software application) loaded in NFC device 12, or mobile 1, or server 16 and configured to be executed by processing means (microcontrollers or computers, in each entity 1, 12, 16) .
- At step 101, user 20 may preferably starts activation (or enrolment) by entering his credentials 23, such as user name or password on the mobile application 2 (here a banking one).
- At step 102, the mobile application 2 starts reading the card 12 (preferably by NFC functionalities) by sending a read request and submitting the contactless card to an electromagnetic field which may also power the card. The card (or NFC device, watch...) may also have internal power source (battery) to operate independently from the NFC reader 1.
- At step 103, after receiving the read request, then the NDEF application 5 starts to capture internal card data such as seed 6 and counter 7. Before sending the response including the current record, the software application 5 in the NFC device, is configured to execute steps aiming to collects predetermined data. Here, data 6 & 7 are available as memorized in an identified memory register.

Software application 5 may also capture optional data such as blob 21 and ATC 10 from an EMV Application 11. Said blob may take any form of data, such as an identity of the user and/or card, the Primary Account Number (PAN) and Expiry Date (EXP) either in clear text or encrypted/obfuscated format.

The NDEF application 5 may also capture any other optional data and therefore the data being captured are not limited to the ones described. For example, the data may come or be captured from outside the card such as a biometric data or a value related to said biometric data of the user.
- At step 104, the NDEF application 5 continues and generates a response (preferably dynamic) using a secret, here exemplified with a seed 6. During the process the counter 7 is incremented.

Optionally the process can request the EMV application to generate an application cryptogram.

The generation of the response, may be a One-Time-Password, challenge-response, and may be based on open standards such as Open Authentication HOTP/OCRA or be based on closed or proprietary specifications. It is also possible that certain or all data is included as the challenge in the challenge-response, either as a concatenation of the data into a challenge block, a data structure, or a hash of the concatenated data. In the case that the NDEF Application 5 captures the fingerprint status 14, it's preferred that the cryptographic operation uses a challenge response mechanism to be able to secure the state of the fingerprint sensor 8.

The seed 6 may be a shared random value, a symmetric key or an asymmetric key, or a diversified key. As long as the bank may be able to verify the response ensure it is non-repayable any of these options are satisfactory.
- At step 105, the NDEF software application 5, then assembles the (preferably dynamic) response data into a NDEF Tag record 22 and returns (step 106) the new fresh (or last) record or NDEF message 22 to the mobile application 2.

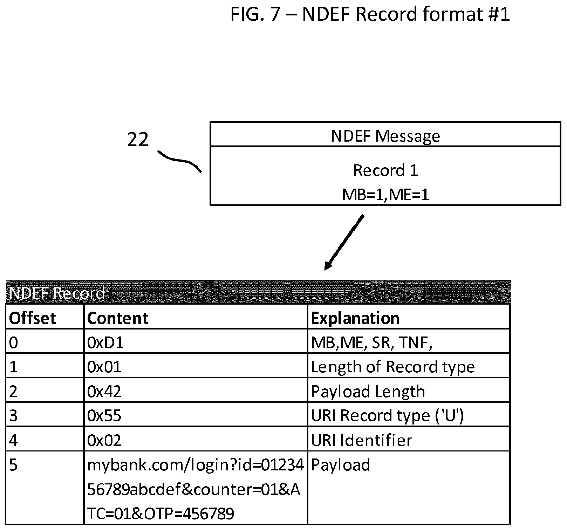

The data format of the record may be either a JSON data block, XML block, or an URL. In the case of URL, the NDEF application 2 may uses the URL 25 as a base, and adds the variables as extension to create a final URL;
- At step 106, the data format of the record 22 may be either a JSON data block, XML block, URI, or an URL. In the case of URI or URL, the NDEF Application 2 may use the URL (25) base, and adds a separator and the variables as extension to create a final URL. The record (22) may also be encoded using JSON, and in that case, preferably using the Mime Type. FIG 7. Exemplifies the coding of a record with URI encoding.

Then the Mobile Application (2) then sends (107) the Record including with the Credentials (23) entered (26) by the user (20) in the Mobile Application (2) to the Application Server (17) over the communication network (15), where the network may be the internet and preferably using a secure communication link such as TLS. In a preferred embodiment, the data transmitted to the Application Server (17) may also be wrapped using encryption and integrity checks of the data using the Application Key Set (27) that is known only by the Mobile Application (2) and the Banking Server (16). By using this key, it is possible for the bank to verify that the request comes from a legitimate application.
- At step 108, the application server 17 forwards the record 22 and credentials 23 to the validation server 18 (either as they are or in a wrapped encryption format). If the data is wrapped, the validation server 18 first decrypts and optionally verifies the authenticity of the data by checking the integrity, (this step is not shown). The more secure steps being that the integrity is verified first before decrypting, avoiding to decrypt data from unknown origin.
- At step 109, the validation server then verifies the credentials 23; this is usually done verifying against a database reference or similar. The Validation Server may also use a dedicated security module such as Host Security Module (HSM), which is not shown here.
- At step 110, the validation server 18 then continues and extracts identity from blob 21 contained in the record 22.
- At step 111, after identity have been retrieved, the validation server 18 looks up (or extracts) the seed; The retrieved seed and/or key is normally shared between the banking server 16 and the card 12 and/or the NDEF application 5, and may also be a corresponding public key, relating to seed 6.
- At step 112, the validation server 18 then continues to validate the response, using the data received, together with the data that was extracted and retrieved in previous step. This validation of the response may also be done using a Host-Security-Module. It may also verify that the received counter is more recent than the one stored in the database (19), and if the verification is successful the Validation Server (18) in step (112) also updates the counter in the database (19).
- At step 113, if the status from validate response in previous step 112 returns OK then the process continues to step 114 below; if the status indicates failure, the process stops and the validation server aborts the process.
- At step 114, the validation server 18 returns OK to application server, who then welcomes the customer at step 115 by sending corresponding message.

Since the application server 17 in this embodiment only acts as a communication proxy, and only forwards the data back and forth, it can easily be omitted, and Mobile Application 2 can instead communicate directly with Validation Server 18, and the validation server 18 can simply notify the application server 17 when the secure mobile application activation process has completed. Similar to this, is the case, when the application server 17 initiates the request, but secure mobile application activation is performed between Mobile Application 2 and validation Server 18.

Example 2 of the process or system usage: Biometric authentication.
- FIG. 1 may also illustrates one embodiment of a contactless card, which has an onboard fingerprint sensor 8, where the card generates a dynamic response code, encoded into a NDEF record 2, only if the fingerprint 31 matches the fingerprint memorized in the fingerprint matching database 9.
- At step 201, user 20 requests login to the mobile application 2.
- At step 202, mobile starts reading records from the card 12. Depending on the configuration of the card, the record may be the first or a subsequent record.
- At step 202, the NDEF application 5 in the card receives the read request,
- At step 203, NDEF application 5 starts to capture internal card data, such as seed and counter 7. It may also capture optional data not show here, such as blob 21 and Application Transaction Counter (ATC) 10 from an EMV application 11. The blob may take any form of data, such as an identity of the user and/or card, the Primary Account Number (PAN) and Expiry Date (EXP) either in clear text or encrypted and/or obfuscated format.

The NDEF application may also capture other optional data and therefore the data being captured are not limited to the ones described. During this process the NDEF application 5 increments the counter 7.
- At step 204, the NDEF application 5 captures fingerprint status (14), which is a result from capturing a minutiae of the fingerprint 31 using the sensor (8-S) and matching it in the matching module (8-M) against a pre-stored (memorized) fingerprint template stored (memorized) in database 9 and return the status either at step 205 or step 209 depending on the fingerprint 31 matches against the stored fingerprint template or not.
- At step 205, if the return is "Fingerprint MATCH", or simply a digital signal, which indicates a positive match of the fingerprint,
- At step 206 then, the NDEF application 5 continues and generates a cryptographic response using a "secret", here exemplified with the seed 6. The generation of the response, may well be a One-Time-Password, Challenge Response, and may be based on open standards such as Open Authentication HOTP/OCRA or be based on other open, closed or proprietary specifications.

The seed may be a shared random value, a diversified seed or key, a symmetric key or an asymmetric key, as long as the bank may be able to verify the authenticity and integrity and preferably also that the response is non-repayable.
- At step 207 The NDEF application then assembles (or combines) the response data (preferably) dynamic into a NDEF Tag record 22;
- At step 208, NDEF application returns the record 22 to the mobile application 2.
- At step 209, when the return value is "NO MATCH", then
- At step 210, the NDEF application assembles the negative response with data to indicate the fingerprint verification failed or that the matching was inconclusive, and exemplified in this example that it generates the record from template and the data is "no match" or "failed", and;
- At step 211 then, NDEF application 5 sends the record 22 to the mobile application 2. The data may be any static or dynamic value. In an alternative embodiment, it could be that the negative data is sent as part of the challenge response calculation.
- At step 212, then the mobile application 2 sends the record 22 to the application server 17 over the communication network 15, preferably internet and preferably using a secure communication link such as Transport Layer Security (TLS).
- At step 213, the application server 17 forwards the record 22 to the validation server 18. The validation server extracts the identity from blob 21, FPS, ATC, and counter contained in the Record 22. After identity have been retrieved, the validation server 18 looks up (extract) the seed in step 215. The retrieved seed should be either be a shared with the NDEF application 5, or the corresponding public key, relating to seed 6.

In this embodiment, the system relies on the strong customer authentication from the card, but as seen in previous embodiment, a variation to this embodiment, would be that the validation server also verify additional user credential 23 entered by the user 20.
- At step 216 the validation server 18 then continues to validate the response, using data received earlier, together with the data that was extracted and retrieved in previous step. It may be that all data is not required, and may be used conditionally based on configurations in the Bank Server 16.
- In step 217, if the validate response returns OK, the process continues, and the validation server 18 returns OK to the application server, where the customer is logged in. If the validate response status fails, the process is aborted.
- At step 218, the validation server 18 returns OK to the application server 17 that indicates successful login attempt by the user, and at step 219 the application server sends a message such as "You're logged in" to the mobile application 2 to indicate success.

### Example 3 of the method or system usage.

In yet another example (or embodiment), the card may generate a 1-factor Response (preferably dynamic) contained in a first record in the NDEF response, and a second at least two factor of response (preferably dynamic), consisting of at least fingerprint matching status, a seed and a counter as input, and creating a second Response (preferably dynamic) contained in a second record of the NDEF response 22.

The term "dynamic" may mean that the card may calculate (or aggregate) a new record 22 base on fresh new data rather than sending the previous memorized one.

The calculation may preferably be made upon reception of a read request of a record from a reader. A NDEF program in the card is directed toward additional steps according to the preferred embodiment of invention (collect data, capture fingerprint, ATC...) instead of responding to the reader request (operating preferably in read only mode) as in the prior art by sending a current memorized record (which may be always the same as static record).

Calculation may be also made after collection of new data, namely 10 (ATC). Alternatively, as soon as a new value of ATC is memorized by a banking application, the system or method may activate a calculation namely at the end of a transaction (causing the ATC change) or before a new operation. This may have the advantage to prepare (or generate) in advance at least part of the generation of a new record and respond faster to a mobile request. The new data may be the new value of the counter 7, which may trigger a generation of at least a part of the record 22 as soon as its value change.

In yet another embodiment, wherein the user have exceeded the maximum number of attempts to verify his fingerprint against a stored fingerprint template stored in the fingerprint database 9, the NDEF application 5 may generate a response (preferably dynamic) with a FP_MATCH_EXCEEDED.

### Embodiment 4 - Remote server fingerprint activated action

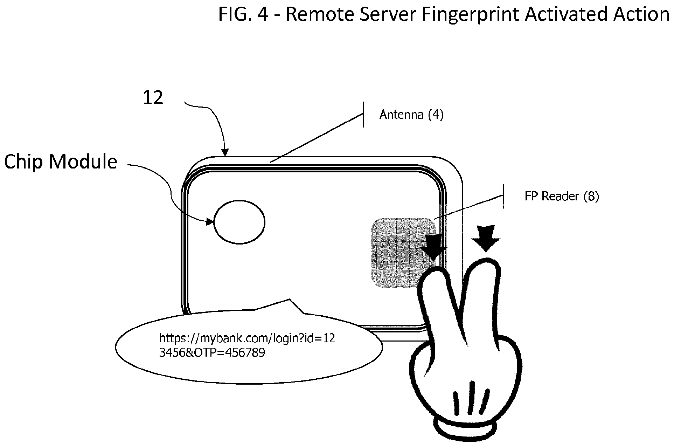

As a variation to previous embodiments, embodiment 4 and figure 4 exemplifies, where the fingerprint database 9 contains multiple fingerprint templates, and upon fingerprint matching, the fingerprint matcher (8-M) searches all the fingerprint templates stored in the fingerprint database 9, and if a match is found, the fingerprint matcher (8-M) also provides a fingerprint identifier linked to the stored fingerprint template as part of the fingerprint matching signal 14, either an index 33 or a unique identifier.

The NDEF Application uses this fingerprint identifier as part of the input of the response (preferably dynamic). This allows to distinguish between different fingerprints, where each fingerprint identifier may be associated to a certain action on the Banking server 16 side.

The server side can then distinguish user's consent, by analyzing the fingerprint index 33 contained as input data and as part of the NDEF Record. This unique identifier may be part of the URL.

In the case of URL that is presented will depend on the status returned by the fingerprint reader:
- Right thumb => Secure Mobile Application Activation, where customer is authenticated in the process
- Right hand middle => Banking Application
- Left hand index => Visit Card
- Left Hand Middles => Approve Payment

The card cannot determine which physical finger is presented to the sensor (8-S) of a user 20, therefore this is a high level notion, but a registration process or a self-service portal may manage these relationships, (not shown here).

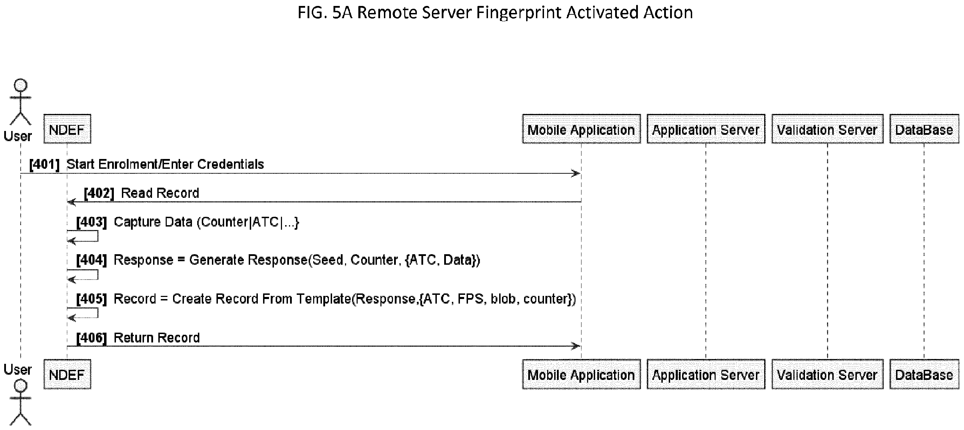

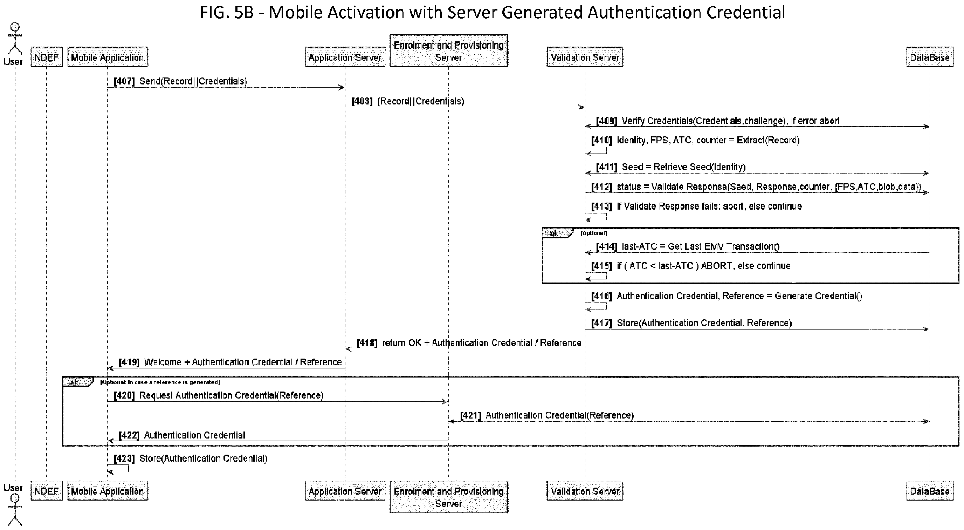

### Embodiment FIG. 5A Remote Server Fingerprint Activated Action & FIG. 5B mobile activation with server generated authentication credentials

FIG. 5A & Fig. 5B, shows an embodiment that is a variation of embodiment 1 and Figure 2. Steps 401 to 413 of fig. 5A & 5B are identical or similar to steps 101 to 113 of fig. 2 and therefore are not described.
- At steps 401 to 406, a response (preferably dynamic) coded in the form of a NDEF Record 22 is generated;
- At step 406 the NDEF application returns the record 22.

At step 404, the generation of the response may be any cryptographic function, advantageously a HOTP or an OCRA challenge response. In the case of an OCRA challenge response the ATC and other captured data are also included as challenge input, including the fingerprint status 14.

Then in the optional steps 414 and 415, the validation server 18 verifies that the ATC, wherein the validation server 18 retrieves last-ATC in step 414, which represent the stored value of the last-ATC 10, which relates to the most recent EMV card transaction recognized and received by the EMV Authorization Host 35 relating to the EMV application 11, and stored in database 19;
- At step 415, if the received ATC is part as input to the generate response, then at step 404, a check is performed. And if the ATC is older than the last-ATC contained in the database, the validation server aborts, otherwise it will continue.
- At step 416, (instead of simply returning OK from the validation server after the user have been authenticated during the "secure mobile application activation process"), the validation server or the enrolment and provisioning server 34, generates an authentication credential 28 and an optional reference, and stores (or memorizes) these at step 417, either in full or parts of it, e.g. only the public key in the database 19.

Then at step 418 and 419 the authentication credential (28) or reference is returned to the Mobile Application 2.

In the case a reference is returned in step 419, alternative additional steps 420 to 422 are performed, in the case when there is a separate system responsible for creating authentication credential 28 and provision them.

In this alternative step, the reference is associated to the authentication credential 28, where the mobile application 2 connects to the enrolment and provisioning server 33 over the network 15 and provides the reference, the enrolment and provisioning server 34 will look up (extract) the reference in the database 19, and if successful return the associated authentication credential 28 to the Mobile Application 2. The enrolment and provisioning server 34 then removes any data relating to the authentication credential and reference from the database 19.
- At step 423, then the mobile application 2 stores the authentication credential 28 on the mobile 1.

Next time the user want to access the bank, the user can then use the authentication credential 28 from within the Mobile Application 2 and use this to authenticate himself towards the Bank Server 16, (this flow is not exemplified).

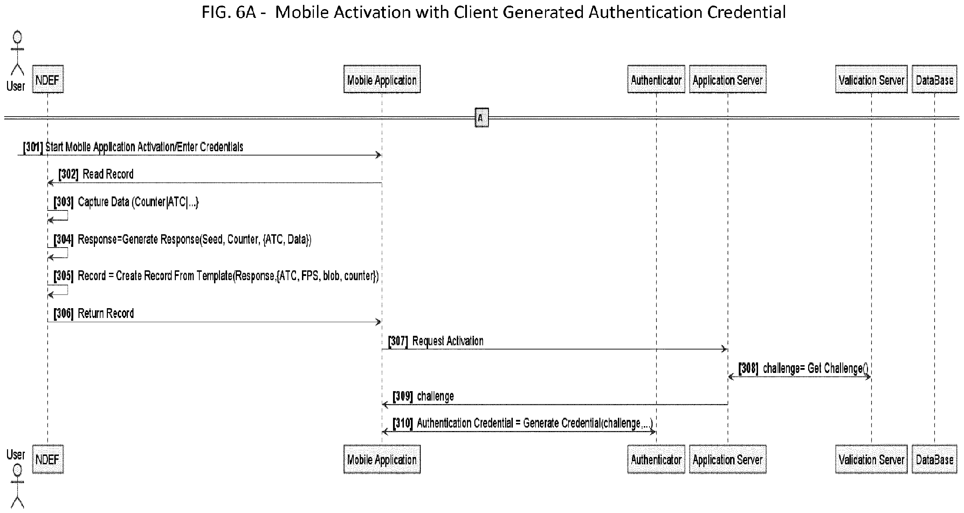

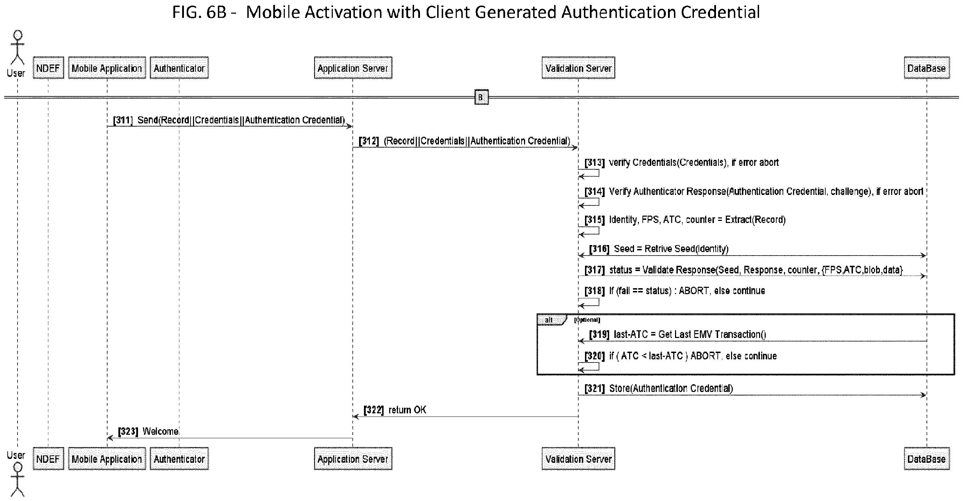

### Embodiment on figures 6A & 6B - Mobile Activation with Client Generated Authentication Credential

Figures 6A & 6B, shows yet another embodiment that is a variation of embodiment 1 and Figure 2, where the mobile application 2 in step 310 generates a local authentication credential 28, which may be preceded at step 308 by a challenge generation request from the banking server side 16 since the mobile application requests activation at step 307.
- At step 308 application server 17 and validation server 18 generates a challenge. This challenge is then stored (memorized) to be used in step 314 and is returned to the mobile application in step 309, the storage (memorization) is preferably done in the database 19, which is not shown.
- At step 310, the mobile application 2 generates an authentication credential 28, which is stored, either by the mobile application 2 or by the Authenticator 29;
- At step 311, the mobile application 2 combines this with user's credential 23 with the record 22 that contains a response (preferably dynamic) captured in previous steps (301 to 306);
- At step 311 then, mobile application 2 sends the record 22 to the application server 17, which forwards it to the validation server 18 in step 312;

This package of data received by the validation server 18 (in step 312) may be encrypted and/or integrity protected by the mobile application in previous step 311 using application key set 27, which is shared between the mobile application 2 and the banking server 16.

In order to make use of this extra security feature, the banking server (in an optional step not shown here), verifies the integrity and/or decrypt the message received in step 312. If the process completes correctly it continues, otherwise it may abort the process.

There are many known ways to protect the integrity and encrypt the data, and any of these methods may be used, such as random key generation using asymmetric key to exchange the session keys, AES key. To strengthen it with software protection mechanism such as White-Box-Crypto to secure the App Key Set 27 may advantageously be used.
- At step 313, the credentials are verified, and if successful the process continues, otherwise it aborts. This last step may be omitted if the record 22 has been able to match a fingerprint, as in that case it could be used without user entered credentials 23;
- At step 314, the validation server 18 verifies the received authentication credential 28, and in the case of FIDO, this includes verification of the attestation of the newly generated authentication credential 28, wherein the validation server 18 uses the challenge generated in previous step 308. If the verification is successful it continues, otherwise it aborts the process;
- At step 315 to 318, the method performs the necessary steps to verify the response, and if it's successful it continues, otherwise it will abort;
- At steps 319 and 320 (optional) then, the validation server 18 verifies that the ATC, wherein the validation server 18 retrieves last-ATC in step 319, which represents the stored value of the last ATC 10 captured and stored in the database 19, of the most recent card transaction recognized by the bank relating to the EMV Application 11;
- At steps 315 if the received ATC is part as input to the generated response in step 304, a check is performed. If it is older than the last-ATC contained in the database, the validation server aborts, otherwise it will continue;

Then after the validation server 18 have executed correctly without any errors all steps from steps 313 to 320, (indicating that a user credentials are authenticated, the card response has been correctly validated, the authentication credentials are validated), then the validation server 18 continues at step 321 and stores the authentication credential 28 with an association to the user 20 in the database 19.

The authentication credential 28 (that the mobile application 2 shares with the banking server 16), may either be a symmetric key such as DSKPP (RFC 6063), or an asymmetric key such as FIDO, but not limited to this.

In the case of FIDO key, the authentication credential 28 is partially split between the mobile application 2 and the banking server 16, in order to increase security, where the public portion is shared with the banking server 16, while the private part is kept either in the mobile application 2 or in the authenticator 29.

The portion shared with the banking server 16 may also contain attestation details, e.g. in case when the authenticator 29 is a FIDO Authenticator. In the case of FIDO, this Authentication Credential contains at least a asymmetric key that is shared between the client and server, where the private part may be derived or diversified, allowing the bank server to validate future request using this key-pair.

In the case of DSKPP, the challenge may be omitted from the server, and the Authentication Credential 28 is a shared secret is exchanged between the Client and the Server.

Next time the user want to access the bank, the user can then use the authentication credential 28 from within the mobile application 2 and use this to authenticate himself towards the bank, this flow is not exemplified.

### Other features and advantages.

As it is well understood, the invention encompasses the following important features or advantages:
Namely it may relate to a method for a secure activation of a mobile application or for authenticating a customer, said method comprising the following step of:
- receiving a reading request of a NDEF record in a NFC portable or wearable device, with a NFC mobile (or reader), said NDEF record containing a response to the said NFC mobile reading or request,
- activating said mobile application or authenticating said customer, based on said response, once it is read or received by said mobile,
- wherein said NFC device is configured to create a trusted NDEF record different for a previous one, based on collected data.

Thanks to the invention, the method is particularly useful to confirm or ascertain or determine the card or NFC device 12 presence with the user or customer during a sensitive operation. The user or customer is using the card or NFC device to determine that the user has both card and NFC reader 1 to access namely to a remote server.

Concerning identity or authentication, the server 16 may decrypts a blob emitted / generated from the NFC device, to retrieve an identity, representing the card, cardholder or the user.

Concerning banking or electronic transaction, the invention enables the ATC to be checked, during a normal EMV transaction, against a last or previous ATC, processed by the issuer authorization system, then stored in a database wherein the ATC represent the last EMV transaction.

### Concerning the fingerprint as collected data.

The invention may include in any of embodiments the following steps:
- in which a Finger-Print-Status (FPS) is checked and included as input to a cryptogram generated in the NFC device as collected data;
- The NDEF Application may generates an application cryptogram from an EMV application in the NFC device or reader (Mobile), optionally using gathered or collected data, to ensure more security.
- If the Finger-Print-Status (FPS) is present, a second dynamic response in a record is generated, that indicates that a valid fingerprint is present. In one example, wherein a first OTP in a first record indicates card authentication, and a second OTP in a second record is generated only if a fingerprint is successfully matched and presented.
- if there are a corresponding matching fingerprint status and a corresponding Index, where the index represent a specific fingerprint, and is linked to a server side action, said action being selected among : a login, a signature, a payment approval, an Application Binding, a modification of the URL accordingly.

Concerning the activation, the invention may provide that:
- An authentication credential is generated in the client side (mobile phone), and provided as part of the collected data;
- An authentication credential may be generated on the server side, and returned back to the NFC device;
- In any of these embodiments, a secure channel may be preferably used, and a dedicated secret is stored inside the mobile application 2;
- In any of these previous embodiments, the server 16 may verify the authenticity of the record or message received from the mobile application, and verify that it was the legitimate mobile application that captured and forwarded the data to the server.

### NDEF Mobile Application Trusted Activation.

In yet another embodiment, the URL (25) is also part of the data collected, wherein the URL contains at least one portion that relates to an action. This collected data is input to the dynamic response, wherein captured data and response is included in record (22), and thereby be able to create a Record with trusted data. This Record (22) with the dynamic response can be tested for authenticity, either by the Mobile Application (2), or by the remote Validation Server (18). The verification step is to assemble the data in the same manner as assembled by the NDEF Application (5), and the use the seed (6) or a corresponding public key, and perform the cryptographic operation to verify that the input content, together with the seed (6) generates a result that compares with generated Dynamic Response.

### NDEF application.

The NDEF application 5 (or another software application according to the communication or coding technology used: 3D, OCR,...) may be configured to generate or simulate a static information (record or NDEF format or 3D code information) before, during or after the implementation of a reading by the terminal (or reader).

Information may have the character or the format of a static information (record) or a file as a standardized NDEF information, but it can be real-time generated or simulated dynamically.

Information may be determined (trigged) or developed in function (or in response or through) all or part of actions performed (or even not conducted) by the user during a communication session on the device or the terminal. Triggering may be made upon detection or upon a receipt of a request of a NFC reader or after collection or capture (31 of new data. It may also include for example detection of an action like submitting the card to the field of the terminal, placing a finger on a fingerprint, typing a pin code on a keyboard of the reader (or the card).

The NDEF application (alone or with another cooperating application) in the card (device) may preferably take care of instructions defined in the NDEF specification (for example at least instructions SELECT Application, SELECT File, and/or READ file).

The NDEF standard (specification) is generally designed to provide static information (tag or registration NDEF) stored or memorized by NFC devices in simple or basic RFID labels (tags), such as static URLs addresses, geographical data, etc. This information is static and unchanged until it is reprogrammed again or changed or replaced by new information namely by an NFC terminal (reader) containing also a corresponding NDEF application.

However, in the context of the invention, a software application 5 in the NFC device is able to change, evolve, generate itself new record including NDEF (or NDEF tag), 3D, 2D (if applicable, with or under control of a joined software application in the device 12).

## Claims

1. A method to manage a trusted NDEF record (22, 22-B) in an NFC device (12) comprising an NDEF application (5), said method comprising a step of generating a NDEF record (22) by said NDEF application,
**characterized in that** said NFC device comprises both a fingerprint reader (8) and a plurality of fingerprint templates having their own identifiers,
**in that** the identifier of each fingerprint template of said plurality of fingerprint templates is associated to a corresponding action to be performed on a remote server (16),
and **in that** the method comprises the following steps:
- capturing a captured fingerprint (31) read by the fingerprint reader,
- performing, by the NFC device, a detection or a receipt of a request (102) of a NFC reader,
- as a result of said detection or upon said receipt of the request (102) generating, by the NFC device, said NDEF record based on data collected (6, 7, 10, 21) in the NFC device, said collected data including both an information related to the captured fingerprint (31) and the identifier (33) of the fingerprint template matching the captured fingerprint,
- reading, by the NFC reader, said NDEF record and forwarding, by the NFC reader, the NDEF record to the remote server (16), and
- triggering, by the remote server, the corresponding action associated to the identifier (33) of the fingerprint template comprised in the received NDEF record.

2. A method according to previous claim, wherein said NDEF record (22) is created in real-time at a format compatible with NDEF record standard.

3. A method according to any one of claims 1 to 2, wherein said NDEF record (22) is captured by the NFC reader in a read only mode.

4. A method according to any one of claims 1 to 3, wherein said NDEF application (5) is configured to realize the following steps:
- Insert said data related to collected data (7, 10, 25, 31) into payload(s) of selected NDEF record(s) and,
- Recalculate, in same communication session (22) between NFC reader and NFC device, the length of said generated NDEF record and/or message.

5. A method according to any one of claims 1 to 4, wherein the NFC device (12) performs at least one internal cryptographic operation (206, 404) to generate a response before returning a record or a response.

6. A method according to previous claim, wherein the cryptographic operation is symmetric and/or HMAC-SHA operation, where the response may be truncated or not, and/or asymmetric key operation where the response is a signature.

7. A method according to previous claim, wherein said device comprises a banking application (11) and said collected data includes an information related to an application transaction counter value (ATC), said value determining the validity of the generated response.

8. A method according to claim 1, **characterized in that** said corresponding action is selected among:
- a secure NFC reader activation;
- a strong customer authentication;
- authorise or unblock an access to a secure account;
- display device information and/or reward on mobile display, and activated when said NFC device is presented to a NDEF reader in order to be read by it or interact with it;
- establish or identify a certain context allowing a remote service provider to take a decision linked to said context;
- authorize or activate a payment.

9. A system to manage a trusted NDEF record (22), said system comprising:
- an NFC device (12) containing an NDEF application (5), **characterized in that**
- said NFC device is configured to perform a detection or a receipt of a request (102) of a NFC reader, **in that**
- as a result of said detection or upon said receipt of the request (102) said NDEF application is configured to generate (105) a NDEF record (22) based on data collected in the NFC device,
**in that** said NFC device comprises both a fingerprint reader (8) and a plurality of fingerprint templates having their own identifiers,
**in that in that** the identifier of each fingerprint template of said plurality of fingerprint templates is associated to a corresponding action to be performed on a remote server (16),
**in that** said collected data includes both an information related to a captured fingerprint (31) read by the fingerprint reader and the identifier (33) of the fingerprint template matching the captured fingerprint,
**in that** the system comprises a remote server (16) and a NFC reader that is configured to read said NDEF record and to forward said NDEF record to the remote server (16), and **in that** the remote server is configured to trigger the corresponding action associated to the identifier (33) of the fingerprint template comprised in the received NDEF record.

10. A system according to previous claim wherein said NFC device (12) is selected among
- a contactless smartcard, a wearable device, an IoT device an electronic watch, a bracelet.

11. A system according to any one of claims 9 to 10, wherein it comprises said NFC reader which is either a mobile phone, an IoT device or an electronic NFC watch.

12. A System according to any one of claims 9 to 11, wherein said NFC device (12) comprises a banking application (11) and said collected data includes an information (10) related to an application transaction counter value (ATC).

13. The system according to any one of claims 9 to 12, wherein the identifier of each fingerprint template of said plurality of fingerprint templates is associated to a corresponding action to be performed on a remote server (16) .

14. The system according to claim 13, wherein the NFC reader is configured to read said NDEF record and to forward the NDEF record to the remote server and wherein the remote server is configured to trigger said corresponding action based on the NDEF record.

15. The system according to claim 9, **characterized in that** said corresponding action is selected among:
- a secure NFC reader activation;
- a strong customer authentication;
- authorise or unblock an access to a secure account;
- display device information and/or reward on mobile display, and activated when said NFC device is presented to a NDEF reader in order to be read by it or interact with it;
- establish or identify a certain context allowing a remote service provider to take a decision linked to said context;
- authorize or activate a payment.

## Patentansprüche

1. Verfahren zum Verwalten einer vertrauenswürdigen NDEF-Aufzeichnung (22, 22-B) in einer NFC-Vorrichtung (12), welche eine NDEF-Anwendung (5) umfasst, wobei das Verfahren einen Schritt zum Generieren einer NDEF-Aufzeichnung (22) durch die NDEF-Anwendung umfasst,
**dadurch gekennzeichnet, dass** die NFC-Vorrichtung sowohl einen Fingerabdruckleser (8) als auch eine Vielzahl von Fingerabdruckvorlagen umfasst, die ihre eigenen Kennungen aufweisen,
dass die Kennung jeder Fingerabdruckvorlage der Vielzahl von Fingerabdruckvorlagen einer entsprechenden Handlung zugeordnet ist, die auf einem entfernten Server (16) durchzuführen ist,
und dass das Verfahren die folgenden Schritte umfasst:
- Aufnehmen eines aufgenommenen Fingerabdrucks (31), der von dem Fingerabdruckleser gelesen wird,
- Durchführen einer Erkennung oder eines Empfangs einer Anforderung (102) eines NFC-Lesers durch die NFC-Vorrichtung,
- infolge der Erkennung oder nach dem Empfang der Anforderung (102) Generieren der NDEF-Aufzeichnung durch die NFC-Vorrichtung auf der Grundlage von Daten, die in der NFC-Vorrichtung zusammengestellt sind (6, 7, 10, 21), wobei die zusammengestellten Daten sowohl Informationen in Bezug auf den aufgenommenen Fingerabdruck (31) als auch die Kennung (33) der Fingerabdruckvorlage einschließen, die mit dem aufgenommenen Fingerabdruck übereinstimmt,
- Lesen der NDEF-Aufzeichnung durch den NFC-Leser und Weiterleiten der NDEF-Aufzeichnung durch den NFC-Leser an den entfernten Server (16), und
- Auslösen der entsprechenden Handlung durch den entfernten Server, die der Kennung (33) der Fingerabdruckvorlage zugeordnet ist, die in der empfangenen NDEF-Aufzeichnung enthalten ist.

2. Verfahren nach dem vorstehenden Anspruch, wobei die NDEF-Aufzeichnung (22) in Echtzeit in einem Format erzeugt wird, welches mit dem NDEF-Aufzeichnungs-Standard kompatibel ist.

3. Verfahren nach einem der Ansprüche 1 bis 2, wobei die NDEF-Aufzeichnung (22) von dem NFC-Leser in einem Nur-Lese-Modus aufgenommen wird.

4. Verfahren nach einem der Ansprüche 1 bis 3, wobei die NDEF-Anwendung (5) so konfiguriert ist, dass sie die folgenden Schritte realisiert:
- Einfügen der Daten, die sich auf die zusammengestellten Daten (7, 10, 25, 31) beziehen, in Nutzdaten einer ausgewählten NDEF-Aufzeichnung (ausgewählter NDEF-Aufzeichnungen) und
- Neuberechnen der Länge der generierten NDEF-Aufzeichnung und/oder der Nachricht in derselben Kommunikationssitzung (22) zwischen dem NFC-Leser und der NFC-Vorrichtung.

5. Verfahren nach einem der Ansprüche 1 bis 4, wobei die NFC-Vorrichtung (12) mindestens eine interne kryptographische Operation (206, 404) durchführt, um eine Antwort zu generieren, bevor sie eine Aufzeichnung oder eine Antwort zurückgibt.

6. Verfahren nach dem vorstehenden Anspruch, wobei es sich bei der kryptographischen Operation um eine symmetrische und/oder eine HMAC-SHA-Operation handelt, bei der die Antwort gekürzt werden kann oder nicht, und/oder um eine asymmetrische Schlüsseloperation, bei der die Antwort eine Signatur ist.

7. Verfahren nach dem vorstehenden Anspruch, wobei die Vorrichtung eine Bankanwendung (11) umfasst und die zusammengestellten Daten Informationen bezüglich eines Anwendungstransaktionszählerwerts (ATC) einschließen, wobei dieser Wert die Gültigkeit der generierten Antwort bestimmt.

8. Verfahren nach Anspruch 1, **dadurch gekennzeichnet, dass** die entsprechende Handlung ausgewählt ist aus:
- einer sicheren Aktivierung des NFC-Lesers;
- einer starken Kundenauthentifizierung;
- Genehmigen oder Entsperren eines Zugriffs auf ein sicheres Konto;
- Anzeigen von Vorrichtungsinformationen und/oder einer Belohnung auf dem mobilen Display und Aktivieren, wenn die NFC-Vorrichtung einem NDEF-Leser präsentiert wird, um von diesem gelesen zu werden oder mit ihm zu interagieren;
- Einrichten oder Identifizieren eines bestimmten Kontexts, was ermöglicht, dass ein entfernter Dienstanbieter eine mit diesem Kontext verknüpfte Entscheidung trifft;
- Genehmigen oder Aktivieren einer Zahlung.

9. System zum Verwalten einer vertrauenswürdigen NDEF-Aufzeichnung (22), wobei das System umfasst:
- eine NFC-Vorrichtung (12), welche eine NDEF-Anwendung (5) enthält, **dadurch gekennzeichnet, dass**
- die NFC-Vorrichtung so konfiguriert ist, dass sie eine Erkennung oder einen Empfang einer Anforderung (102) eines NFC-Lesers durchführt, dass
- infolge der Erkennung oder nach dem Empfang der Anforderung (102) die NDEF-Anwendung so konfiguriert ist, dass sie auf der Grundlage von Daten, die in der NFC-Vorrichtung zusammengestellt sind, eine NDEF-Aufzeichnung (22) generiert (105),
dass die NFC-Vorrichtung sowohl einen Fingerabdruckleser (8) als auch eine Vielzahl von Fingerabdruckvorlagen umfasst, die ihre eigenen Kennungen aufweisen,
dass die Kennung jeder Fingerabdruckvorlage der Vielzahl von Fingerabdruckvorlagen einer entsprechenden Handlung zugeordnet ist, die auf einem entfernten Server (16) durchzuführen ist,
dass die zusammengestellten Daten sowohl Informationen in Bezug auf einen aufgenommenen Fingerabdruck (31), der von dem Fingerabdruckleser gelesen wird, als auch die Kennung (33) der Fingerabdruckvorlage einschließt, die mit dem aufgenommenen Fingerabdruck übereinstimmt, dass das System einen entfernten Server (16) und einen NFC-Leser umfasst, der so konfiguriert ist, dass er die NDEF-Aufzeichnung liest und die NDEF-Aufzeichnung an den entfernten Server (16) weiterleitet, und dass der entfernte Server so konfiguriert ist, dass er die entsprechende Handlung auslöst, die der Kennung (33) der Fingerabdruckvorlage zugeordnet ist, die in der empfangenen NDEF-Aufzeichnung enthalten ist.

10. System nach dem vorstehenden Anspruch, wobei die NFC-Vorrichtung (12) ausgewählt ist aus
- einer kontaktlosen Smartcard, einer am Körper tragbaren Vorrichtung, einer IoT-Vorrichtung , einer elektronischen Armbanduhr, einem Armband.

11. System nach einem der Ansprüche 9 bis 10, wobei es den NFC-Leser umfasst, der entweder ein Mobiltelefon, eine IoT-Vorrichtung oder eine elektronische NFC-Uhr ist.

12. System nach einem der Ansprüche 9 bis 11, wobei die NFC-Vorrichtung (12) eine Bankanwendung (11) umfasst und die zusammengestellten Daten Informationen (10) einschließen, die sich auf einen Anwendungstransaktionszählerwert (ATC) beziehen.

13. System nach einem der Ansprüche 9 bis 12, wobei die Kennung jeder Fingerabdruckvorlage der Vielzahl von Fingerabdruckvorlagen einer entsprechenden Handlung zugeordnet ist, die auf einem entfernten Server (16) durchzuführen ist.

14. System nach Anspruch 13, wobei der NFC-Leser so konfiguriert ist, dass er die NDEF-Aufzeichnung liest und die NDEF-Aufzeichnung an den entfernten Server weiterleitet, und wobei der entfernte Server so konfiguriert ist, dass er die entsprechende Handlung auslöst, die auf der NDEF-Aufzeichnung basiert.

15. System nach Anspruch 9, **dadurch gekennzeichnet, dass** die entsprechende Handlung ausgewählt ist aus:
- einer sicheren Aktivierung des NFC-Lesers;
- einer starken Kundenauthentifizierung;
- Genehmigen oder Entsperren eines Zugriffs auf ein sicheres Konto;
- Anzeigen von Vorrichtungsinformationen und/oder einer Belohnung auf dem mobilen Display und Aktivieren, wenn die NFC-Vorrichtung einem NDEF-Leser präsentiert wird, um von diesem gelesen zu werden oder mit ihm zu interagieren;
- Einrichten oder Identifizieren eines bestimmten Kontexts, was ermöglicht, dass ein entfernter Dienstanbieter eine mit diesem Kontext verknüpfte Entscheidung trifft;
- Genehmigen oder Aktivieren einer Zahlung.

## Revendications

1. Procédé permettant la gestion d'un enregistrement NDEF (22, 22-B) de confiance dans un dispositif NFC (12) comprenant une application NDEF (5), ledit procédé comprenant une étape consistant à générer un enregistrement NDEF (22) par ladite application NDEF,
**caractérisé en ce que** ledit dispositif NFC comprend à la fois un lecteur d'empreintes digitales (8) et une pluralité de modèles d'empreintes digitales ayant leurs propres identificateurs,
**en ce que** l'identificateur de chaque modèle d'empreinte digitale de ladite pluralité de modèles d'empreintes digitales est associé à une action correspondante à réaliser sur un serveur distant (16),
**et en ce que** le procédé comprend les étapes suivantes :
- la capture d'une empreinte digitale capturée (31) lue par le lecteur d'empreintes digitales,
- la réalisation, par le dispositif NFC, une détection ou d'une réception d'une demande (102) d'un lecteur NFC,
- la génération, par le dispositif NFC, à la suite de ladite détection ou après ladite réception de la demande (102), dudit enregistrement NDEF en fonction des données collectées (6, 7, 10, 21) dans le dispositif NFC, lesdites données collectées comportant à la fois une information relative à l'empreinte digitale capturée (31) et l'identificateur (33) du modèle d'empreinte digitale correspondant à l'empreinte digitale capturée,
- la lecture, par le lecteur NFC, dudit enregistrement NDEF et transmission, par le lecteur NFC, de l'enregistrement NDEF au serveur distant (16), et
- le déclenchement, par le serveur distant, de l'action correspondante associée à l'identificateur (33) du modèle d'empreinte digitale compris dans l'enregistrement NDEF reçu.

2. Procédé selon la revendication précédente, dans lequel l'enregistrement NDEF (22) est créé en temps réel dans un format compatible avec la norme d'enregistrement NDEF.

3. Procédé selon l'une des revendications 1 à 2, dans lequel ledit enregistrement NDEF (22) est capturé par le lecteur NFC en mode lecture seule.

4. Procédé selon l'une quelconque des revendications 1 à 3, dans lequel ladite application NDEF (5) est configurée pour réaliser les étapes suivantes :
- L'insertion desdites données relatives aux données collectées (7, 10, 25, 31) dans la ou les charges utiles d'un ou d'enregistrements NDEF choisis, et
- Le recalcul, au cours de la même session de communication (22) entre le lecteur NFC et le dispositif NFC, de la longueur de l'enregistrement et/ou du message NDEF généré.

5. Procédé selon l'une quelconque des revendications 1 à 4, dans lequel le dispositif NFC (12) réalise au moins une opération cryptographique interne (206, 404) pour générer une réponse avant de renvoyer un enregistrement ou une réponse.

6. Procédé selon la revendication précédente, dans lequel l'opération cryptographique est une opération symétrique et/ou HMAC-SHA où la réponse peut être tronquée ou non, et/ou une opération à clé asymétrique où la réponse est une signature.

7. Procédé selon la revendication précédente, dans lequel ledit dispositif comprend une application bancaire (11) et lesdites données collectées comportent une information relative à une valeur de compteur de transaction d'application (ATC), ladite valeur déterminant la validité de la réponse générée.

8. Procédé selon la revendication 1, **caractérisé en ce que** ladite action correspondante est choisie parmi :
- une activation sécurisée du lecteur NFC ;
- une authentification forte des clients ;
- l'autorisation ou le déblocage d'un accès à un compte sécurisé ;
- l'affichage d'informations de dispositif et/ou d'une récompense sur l'écran mobile, et leur activation lorsque ledit dispositif NFC est présenté à un lecteur NDEF afin d'être lu par celui-ci ou d'interagir avec celui-ci ;
- l'établissement ou l'identification d'un certain contexte permettant à un prestataire de services à distance de prendre une décision liée audit contexte ;
- l'autorisation ou l'activation d'un paiement.

9. Système permettant la gestion d'un enregistrement NDEF de confiance (22), comprenant :
- un dispositif NFC (12) contenant une application NDEF (5),
**caractérisé en ce que**
- ledit dispositif NFC est configuré pour réaliser une détection ou une réception d'une demande (102) d'un lecteur NFC, **en ce que,**
- à la suite de ladite détection ou après ladite réception de la demande (102), ladite application NDEF est configurée pour générer (105) un enregistrement NDEF (22) en fonction des données collectées dans le dispositif NFC,
**en ce que** ledit dispositif NFC comprend à la fois un lecteur d'empreintes digitales (8) et une pluralité de modèles d'empreintes digitales ayant leurs propres identificateurs,
**en ce que** l'identificateur de chaque modèle d'empreinte digitale de ladite pluralité de modèles d'empreintes digitales est associé à une action correspondante à réaliser sur un serveur distant (16),
**en ce que** lesdites données collectées comportent à la fois une information relative à une empreinte digitale capturée (31) lue par le lecteur d'empreintes digitales et l'identificateur (33) du modèle d'empreinte digitale correspondant à l'empreinte digitale capturée, **en ce que** le système comprend un serveur distant (16) et un lecteur NFC configuré pour lire ledit enregistrement NDEF et le transmettre au serveur distant (16), **et en ce que** le serveur distant est configuré pour déclencher l'action correspondante associée à l'identificateur (33) du modèle d'empreinte digitale compris dans l'enregistrement NDEF reçu.

10. Système selon la revendication précédente dans lequel ledit dispositif NFC (12) est choisi parmi
- une carte à puce sans contact, un dispositif portable, un dispositif IoT, une montre électronique, un bracelet.

11. Système selon l'une quelconque des revendications 9 à 10, dans lequel il comprend ledit lecteur NFC qui est soit un téléphone mobile, soit un dispositif IoT, soit une montre électronique NFC.

12. Système selon l'une quelconque des revendications 9 à 11, dans lequel ledit dispositif NFC (12) comprend une application bancaire (11) et lesdites données collectées comportent une information (10) relative à une valeur de compteur de transaction d'application (ATC).

13. Système selon l'une quelconque des revendications 9 à 12, dans lequel l'identificateur de chaque modèle d'empreinte digitale de ladite pluralité de modèles d'empreintes digitales est associé à une action correspondante à réaliser sur un serveur distant (16).

14. Système selon la revendication 13, dans lequel le lecteur NFC est configuré pour lire ledit enregistrement NDEF et pour transmettre l'enregistrement NDEF au serveur distant, et dans lequel le serveur distant est configuré pour déclencher ladite action correspondante en fonction de l'enregistrement NDEF.

15. Système selon la revendication 9, **caractérisé en ce que** ladite action correspondante est choisie parmi :
- une activation sécurisée du lecteur NFC ;
- une authentification forte des clients ;
- l'autorisation ou le déblocage d'un accès à un compte sécurisé ;
- l'affichage d'informations de dispositif et/ou d'une récompense sur l'écran mobile, et leur activation lorsque ledit dispositif NFC est présenté à un lecteur NDEF afin d'être lu par celui-ci ou d'interagir avec celui-ci ;
- l'établissement ou l'identification d'un certain contexte permettant à un prestataire de services à distance de prendre une décision liée à ce contexte ;
- l'autorisation ou l'activation d'un paiement.
